# EUROPEAN PATENT APPLICATION

(11) **EP 2 708 859 A1**
(43) Date of publication of application: **19.03.2014**
(21) Application number: 13183191.9
(22) Date of filing: 05.09.2013
(51) Int. Cl.: G01F 23/28

(54) **System and method for determining volume of material in a tank**

(30) Priority: 14.09.2012 US 201213618817
(71) Applicant: Deere & Company, Moline, IL 61265-8098 (US)
(72) Inventor: Liu, James Z, Venice, FL 34292 (US)
(74) Representative: Münch, Christian

(57) **Abstract**

A system for determining volume of material in a tank (8, 9) and method for measuring the quantity of material in a tank (8, 9) such as a commodity air cart (4) of an air seeder (2) in which a sensor or sensors (50, 60) are used to measure the distance to the surface (44) of the material (42). The distance data is then used to determine a surface profile of the material (42) from which the volume of material (42) is calculated. The volume is converted to weight using known material density information.

## Description

The invention relates to a system for determining volume of material in a tank, the system comprising: one or more sensors positioned above a quantity of material in a tank. The invention further comprises a method of measuring a quantity of material in a tank.

When distributing material from a tank, it is often beneficial to know the quantity of material in the tank. One such material distribution application is in the context of an agricultural air seeder. It is important to know when the material, such as seed or fertilizer, will be exhausted so the machine can be resupplied. Material level sensors have been used to indicate the level. Such sensors have been used to detect when the level drops below a certain point or points, such as one-quarter full, half full or three quarters full. Video cameras have also been used to allow a machine operator to see the material level in the tank during operation. The level of material in a tank can also be determined using an ultrasonic or infrared distance sensor to measure the distance from the sensor at the top of the tank to the surface of the material, usually at a single point. Such a sensor can be used to provide real time data of the height of the material in the tank.

While knowledge of the material level in the tank is useful to determine when to resupply the tank, this is of limited value. More useful is knowledge of the actual quantity of material in the tank. Recent advances in technology have used load cells supporting a tank to continuously measure the weight of material in a tank. However, the ability to accurately weigh a tank or container requires that each tank be separated from other tanks and scales cannot be used with multiple compartment tanks. Knowing the exact quantity of material in the tank in real time can be useful in automatic meter calibration without a separate calibration procedure with the machine stopped.

It is therefore an object of the invention to overcome above mention problems.

The object will be achieved by the teaching of independent claims 1 and 7. Further advantageous solutions will be defined in the accompanying claims.

Accordingly, a system of above mentioned type comprises that the sensors are adapted to detect the distance between the sensors and the surface of the material at multiple locations, the sensors generating output signals indicative of the distance from the sensors to the material surface at the multiple locations; a controller receiving the sensor output signals, the controller adapted to determine a surface profile of the material and the controller adapted to determine the volume of material in the tank using the surface profile and stored data regarding the tank shape. Further a method of measuring a quantity of material in a tank comprises the steps of providing one or more sensors adapted to be positioned above a quantity of material in a tank, the sensors adapted to detect the distance between the sensors and the surface of the material at multiple locations, the sensors generating output signals indicative of the distance between the sensors and the surface of the material at the multiple locations; providing a controller adapted to receive the sensor output signals, the controller adapted to determine a surface profile of the material and the controller adapted to determine the volume of material in the tank using the surface profile and stored data regarding the tank shape; operating the sensors to determine the distance between the sensors and the surface of the material at the multiple locations and generating the output signals indicative of the distance between the sensors and the surface of the material at the multiple locations; receiving the output signals at the controller; and using the controller to determine a material surface and material volume.
Fig. 1 is a side elevational view of an air seeder having an air cart and tool;
Fig. 2 is a top view of the air cart tank illustrating multiple sensors at the top of the tank;
Fig. 3 is a sectional view of the air cart tank as seen along the line 3-3 of Fig. 2;
Fig. 4 is a schematic diagram of a control circuit;
Fig. 5 is another sectional view of the air cart tank like Fig. 3 illustrating another embodiment; and
Figs. 6 and 7 are diagrams showing multiple focus points for camera auto-focus sensors;

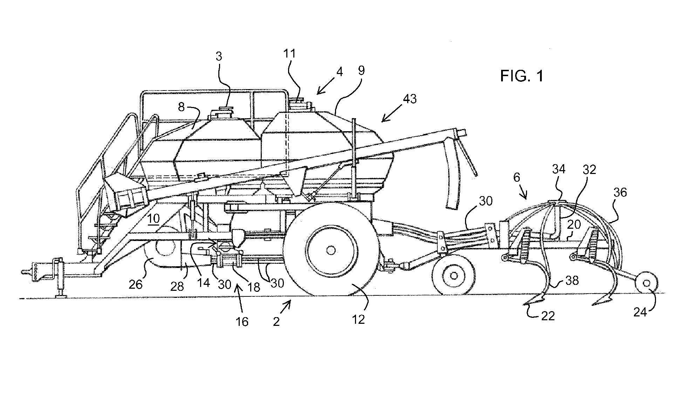

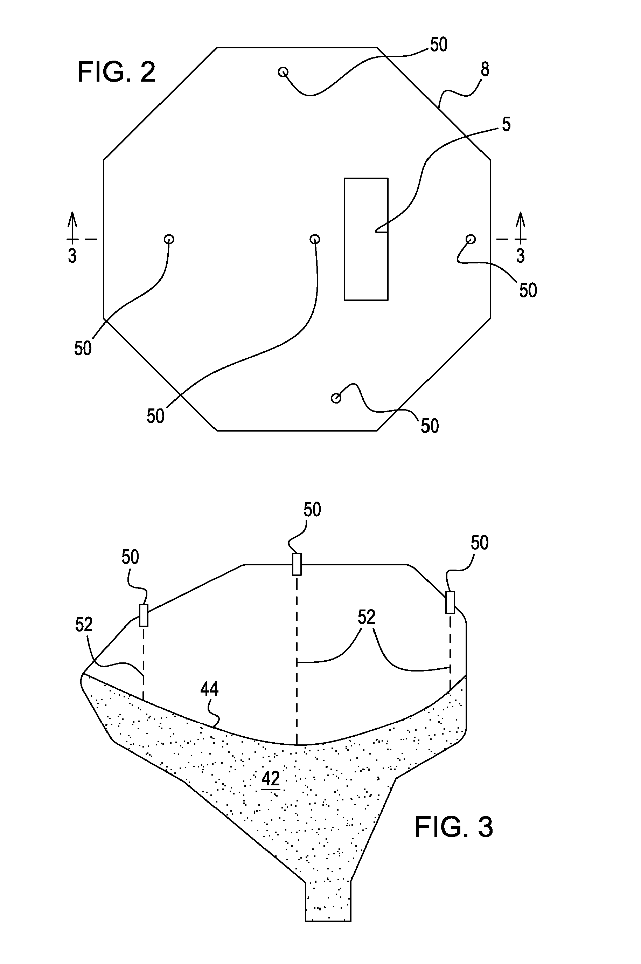

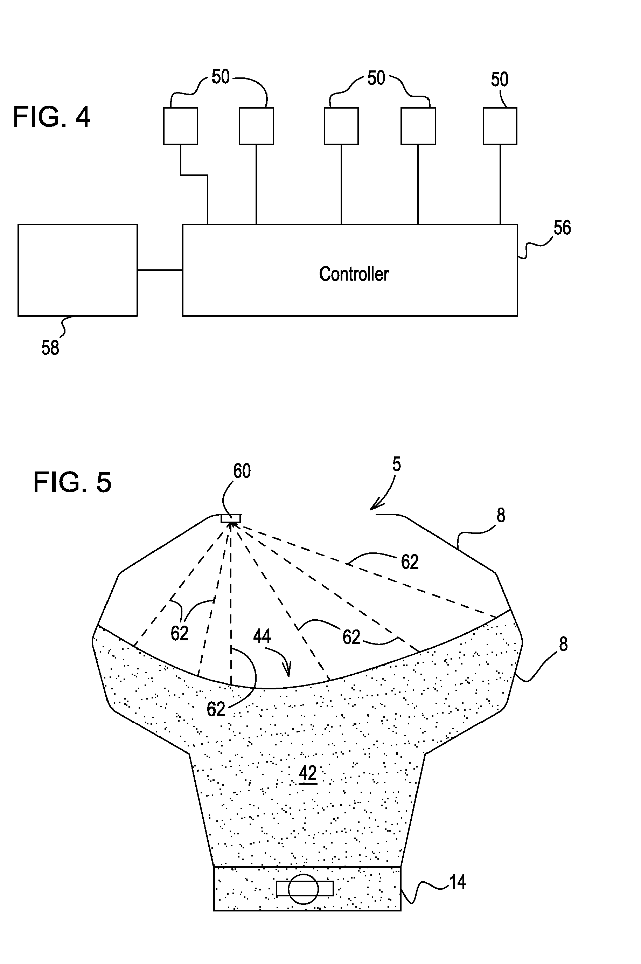

FIG. 1 shows an agricultural implement such as an air seeder 2. The air seeder 2 comprises a commodity cart 4 towed between a tractor (not shown) and a tilling implement 6. The commodity cart 4 has a frame 10 upon which the product tanks 8 and 9 and wheels 12 are mounted. Each product tank has a door 3 releasably sealing an opening 5 (shown in Figs 2 and 5) at its upper end for filling the tank with product. A metering system 14 is provided at the lower end of each tank (only one of which is shown) for controlled feeding of product (in this case, granular material) into a pneumatic distribution system 16 at a primary distribution manifold 18. The tilling implement 8, towed behind the commodity cart 4, includes a frame 20 to which ground openers 22 and packers 24 are mounted.

The pneumatic distribution system 16 includes a centrifugal fan 26 which is connected to a plenum 28, which is in turn connected by distribution lines 30 to one or more primary distribution manifolds 18, each associated with a product tank 8 or 9. The primary distribution manifolds 18 are connected by distribution lines 30 to a dimpled riser tube 32, which is coupled to a secondary distribution header 34. Secondary distribution lines 36 connect the secondary distribution header 34 to seed boots 38 mounted on the ground openers 22.

During operation of the air seeder 2, air and product flow in the pneumatic distribution system 16 from the primary distribution manifold 18 through distribution lines 30 to the dimpled riser tubes 32 which attempt to randomize distribution of product from the secondary distribution headers 34 which are immediately downstream. The secondary distribution headers 34 divide the product substantially evenly into a series of the distribution lines 36 leading to the seed boots 38 on the ground openers 22.

Fig. 2 is a top view of the tank 8. The door at the upper opening 5 is not shown. The top of the tank has been equipped with five distance sensors 50. The sensors 50 are used to measure the distance from the sensors to the surface 44 of the material 42 as shown in Fig. 3. The sight-lines of the three sensors 50 on the center-line are shown as dashed lines 52. The sensors 50 are coupled to controller 56 as shown in Fig. 4 to communicate the output signals of the sensors to the controller. The controller uses the distance data from the sensors to the material surface 44 to create a surface profile of the material. The more sensors that are used, the more accurate will be the generated surface profile. While five sensors are shown in Fig. 2, five to ten sensors will produce an accurate surface profile in most air seeder applications. The sensors 50 can be ultrasonic, infrared or any other distance measuring sensor suitable for use with seed, fertilizer and other agricultural chemicals. The need to operate in a dust filled environment may be a factor in the choice of sensor type. A three dimensional laser scanner or camera may also be used but adds considerable cost.

Once the profile of the surface 44 is created from the sensor data, the controller uses the profile and stored data on the size and configuration of the tank 8 to calculate the volume of material in the tank. It is this step that moves beyond mere knowledge of the material height at one or more locations to actual knowledge of the quantity of material in the tank. If the density of the material is known, the weight can then be calculated once the volume is determined. Density information can be stored in a memory using nominal values for different materials. Alternatively, after a known weight of material is supplied to the tank, the surface profile can be determined from distance measurement, the volume calculated and then the density calculated. Operation of the machine may result in compacting of the material thereby increasing the density. This must be accounted for. The use of sensors to generate a surface profile and from there to calculate volume and weight, overcomes the limitations on the use of load cells described above.

Multiple sensors as shown in Fig. 2 require a wiring harness to connect the sensors to the controller, adding to the cost and complexity of the system. Cost and complexity can be reduced by using a single sensor that measures the distance to multiple points on the material surface. One type of relatively low cost sensor is a 2-dimensional camera multiple point active auto-focus sensor. With reference to Fig. 5, a single sensor 60 is provided at the top of the tank 8 which measures the distance to the surface 44 at multiple locations. The various lines along with the sensor detects the distance to the surface 44 are shown by the dashed lines 62. The number of detection points can be any number desired to achieve the desired accuracy but likely five to nine points will be sufficient in the context of an agricultural air seeder tank.

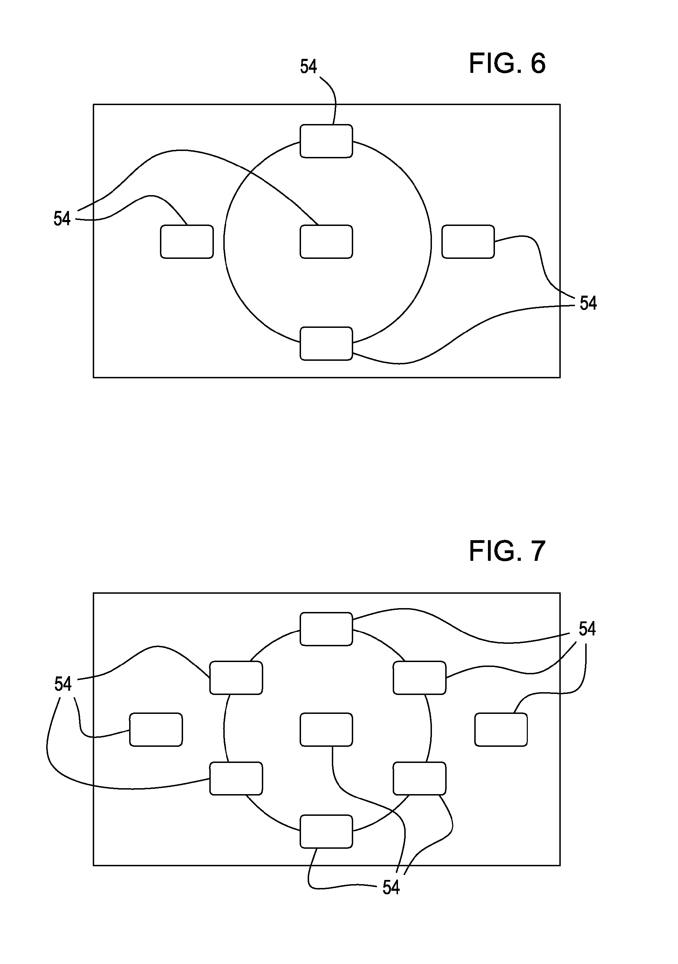

Low to midrange consumer cameras typically have three to nine focus points where the sensor determines the distance from the camera to each point. Higher end cameras may have many more focus points. Camera auto-focus sensors typically have the focus points arranged in a grid pattern as shown in Fig. 6 with five sensor points 54 or as shown in Fig. 7 with nine sensor points 54. By providing distance information to multiple points, the sensor offers information similar to a 3-dimension camera. The sensor output signals are communicated to a controller 56 as shown in Fig. 4.

There are various ways a sensor can determine distance, including ultrasonic sound waves and infrared light. In the first case, sound waves are emitted from the sensor, and by measuring the delay in the reflection of the sound waves, distance to the subject is calculated. Several cameras, including the Polaroid Spectra and SX-70 apply an ultrasonic auto-focus sensor. In the case of an infrared sensor, the infrared light is usually used to triangulate the distance to the subject. Compact cameras including the Nikon 35TiQD and 28TiQD, the Canon AF35M, and the Contax T2 and T3 use an infrared system. Other methods of determining the distance to the object instead of triangulation are the time of flight for the reflected signal and the amount of infrared light reflected from the subject.

As with the multiple sensors 50 above, the output signals from the multiple point sensor 60 are communicated to the controller 56. The controller is programmed or configured to receive the distance data from the sensor 60 and determine a profile of the material surface 44. Using the surface profile and stored data on the tank shape, the controller then determines the volume of material in the tank. Material volume can be converted to material weight using density information.

Having described the preferred embodiment, it will become apparent that various modifications can be made without departing from the scope of the invention as defined in the accompanying claims.

## Claims

1. A system for determining volume of material in a tank (8, 9), the system comprising: one or more sensors (50, 60) positioned above a quantity of material (42) in a tank (8, 9), **characterized in that** the sensors (50, 60) are adapted to detect the distance between the sensors (50, 60) and the surface (44) of the material (42) at multiple locations, the sensors (50, 60) generating output signals indicative of the distance from the sensors (50, 60) to the material surface (44) at the multiple locations; a controller (56) receiving the sensor output signals, the controller (56) adapted to determine a surface profile of the material (42) and the controller (56) adapted to determine the volume of material (42) in the tank (8, 9) using the surface profile and stored data regarding the tank shape.

2. The system of claim 1 wherein each sensor (50, 60) is used to detect the material surface (42) at a single location.

3. The system of claim 1 or 2 wherein one sensor (60) is used to detect the material surface at multiple locations.

4. The system of claim 3 wherein the sensor (60) is a two-dimensional multiple point camera autofocus sensor.

5. The system of one of the claims 1 to 4 wherein the controller (56) is further adapted to determine weight of material (42) in the tank (8, 9) based on the calculated volume and stored data regarding material density.

6. A method of measuring a quantity of material (42) in a tank (8, 9) comprising the steps of:
providing one or more sensors (50, 60) adapted to be positioned above a quantity of material (42) in a tank (8, 9), the sensors (50, 60) adapted to detect the distance between the sensors (50, 60) and the surface (44) of the material (42) at multiple locations, the sensors (50, 60) generating output signals indicative of the distance between the sensors (50, 60) and the surface (44) of the material (42) at the multiple locations;
providing a controller (56) adapted to receive the sensor output signals, the controller (56) adapted to determine a surface profile of the material and the controller (56) adapted to determine the volume of material (42) in the tank (8, 9) using the surface profile and stored data regarding the tank shape;
operating the sensors (50, 60) to determine the distance between the sensors (50, 60) and the surface (44) of the material (42) at the multiple locations and generating the output signals indicative of the distance between the sensors (50, 60) and the surface (44) of the material (42) at the multiple locations;
receiving the output signals at the controller (56); and
using the controller (56) to determine a material surface (44) and material volume.

7. The method of claim 6 further comprising the step of calculating a material weight based on the calculated volume and stored material density data.

8. The method of claim 6 or 7 further comprising the step of:
filing the tank (8, 9) with a quantity of material having a known weight;
determining a surface profile of the material (42);
determining the material volume; and
using the volume and known weight of the material (42), calculating a material density.
